# EUROPÄISCHE PATENTSCHRIFT

(11) **EP 1 302 013 B1**
(45) Veröffentlichungstag und Bekanntmachung des Hinweises auf die Patenterteilung: **21.06.2006**
(21) Anmeldenummer: 01955239.7
(22) Anmeldetag: 11.07.2001
(51) Int. Cl.: H04L 1/00

(54) **VERFAHREN ZUR DATENÜBERTRAGUNG IM ACCESS BEREICH**
METHOD FOR TRANSMITTING DATA IN THE ACCESS AREA
PROCEDE DE TRANSMISSION DE DONNEES EN ZONE D'ACCES

(30) Priorität: 20.07.2000 DE 10035389
(43) Veröffentlichungstag der Anmeldung: 16.04.2003
(73) Patentinhaber: SIEMENS AKTIENGESELLSCHAFT, 80333 München (DE)
(72) Erfinder: BEYER, Günter, 82110 Germering (DE); GIECK, Reiner, 82110 Germering (DE)
(86) Internationale Anmeldenummer: PCT/DE2001/002584
(87) Internationale Veröffentlichungsnummer: WO 2002/009341

(56) Entgegenhaltungen:
- WO-A-00/27162

## Beschreibung

Die Erfindung betrifft ein Verfahren gemäß dem Oberbegriff von Patentanspruch 1.

Im Access Bereich werden Daten von einer Sendeeinrichtung einem oder mehreren Teilnehmern (Empfangseinrichtungen) zugeführt. Die Sendeeinrichtung kann als Multiplexer oder im Falle der Telefonie als Ortsvermittlungsstelle ausgebildet sein. Hierbei kommen unterschiedliche Übertragungsverfahren zur Geltung.

Bei der Verwendung zeitgemäßer Basisbandverfahren nimmt die Reichweite mit zunehmender Übertragungsgeschwindigkeit ab. Dies bedeutet, daß bei einer Erhöhung der Übertragungsgeschwindigkeit die zu übertragenden Daten nur über immer kürzere Verbindungsleitungen den Teilnehmern zugeführt werden können. Ist man bei vorgegebener Strecke und einer gewählten Geschwindigkeit bereits an der Grenze angelangt, ist es nicht mehr möglich auf eine noch höhere Geschwindigkeit umzuschalten. Da der Abstand zur Grenze oft unbekannt ist, besteht eine Möglichkeit der Problemlösung in der Änderung der Geschwindigkeit in kleinen Schritten. Dadurch wird aber häufig Performance verschenkt. Alternativ können grundsätzlich nur solche Reichweiten gewählt werden, bei denen sichergestellt ist, daß sie auch bei der maximal möglichen Geschwindigkeit überbrückt werden können.

Soll die Übertragungsgeschwindigkeit zwischen der Sendeeinrichtung und den Empfangseinrichtungen erhöht werden, kann dies nur derart erfolgen, daß beide Stationen (d.h. Sendeeinrichtung und Empfangseinrichtungen) mit der gleichen, erhöhten Geschwindigkeit arbeiten. Hierzu muß ausgehend von einer der Stationen wie z. B. der Sendeeinrichtung der jeweils in Frage kommenden Empfangseinrichtung mitgeteilt werden, daß eine Erhöhung der Übertragungsgeschwindigkeit gewünscht ist sowie zu diesem Zweck entsprechende Einstellbefehle mitgesandt werden.

Die hierzu erforderliche Kommunikation zwischen Sendeeinrichtung und Empfangseinrichtung wird über einen gesonderten Kanal vorgenommen. Dieser kann als unabhängiger Outbandkanal (Nutzdaten und Steuerdaten (Signalisierungsdaten) werden über verschiedene Strecken geführt) oder Inbandkanal (Nutzdaten und Steuerdaten werden über eine Strecke geführt) ausgebildet sein. In letzterem Fall muß bei entsprechender Reichweitensicherheit darauf geachtet werden, daß nach dem Hochschalten auf eine höhere Geschwindigkeit die Kommunikation zwischen den beiden Stationen weiterhin sichergestellt ist. Im Zweifel muss daher die Geschwindigkeit bei einer bestehenden Verbindung erhalten bleiben.

Die Erhöhung der Übertragungsgeschwindigkeit über die kritische Grenze hinaus ist insofern problematisch, da in diesem Fall ein zu geringer Pegel am Empfangsort ankommt, und als Folge davon die Synchronität zwischen Sendeeinrichtung und Empfangseinrichtung ("Empfangseinrichtung hängt sich ab") verloren geht und damit eine Kommunikation zwischen den beiden Stationen nicht mehr möglich ist. Dies hat seinen Grund darin, daß in diesem Fall die Sendeeinrichtung sich auf die erhöhte Geschwindigkeit bereits eingestellt hat, die Gegenseite aber für sich noch mit der alten Geschwindigkeit arbeitet.

Eine Kommunikation ist dann nicht mehr möglich, da die Gegenseite (Remote Station) "abgehängt" ist. Eine Zusammenarbeit ist dann erst wieder möglich, wenn händisch beiden Stationen auf die gleiche Geschwindigkeit einstellt werden.

Ein einschlägiger Stand der Technik wird durch das Dokument WO-A-00/27162 offenbart, welches ein Verfahren zum Übertragen von Informationssignalen im Teilnehmeranschlußbereich zum Thema hat. Dieses Dokument zeigt auf, wie Informationssignale im Teilnehmeranschlußbreich dynamisch mit unterschiedlichen Geschwindigkeiten zwischen zwei Übertragungseinrichtungen übertragen werden können. Die Synchronität zwischen den Übertragungseinrichtungen wird mittels eines Synchronwortes erreicht.

Der Erfindung liegt die Aufgabe zugrunde, einen Weg aufzuzeigen, wie auch nach dem Verändern der Übertragungsgeschwindigkeit die Synchronität zwischen Sende -und Empfangseinrichtung wieder sicher erreicht werden kann.
Die Erfindung wird ausgehend vom Oberbegriff von Patentanspruch 1 durch die im kennzeichnenden Teil angegebenen Merkmale gelöst.

Vorteilhaft an der Erfindung ist die Verwendung eines quittierten Nachrichtenaustausches zwischen der Mastereinrichtung (lokale Station) und den Slaveeinrichtungen (Remote Station) zu sehen. Insofern handelt es sich um eine Kombination der Eigenschaften der Breitband-Technik mit einer Quittung. Damit ist der Vorteil verbunden, daß die Remote Stationen nicht abgehängt werden, da diese sonst nicht mehr erreichbar wären. Durch die immer wieder erreichte Synchronität wird die Blockierungswahrscheinlichkeit des Systems herabgesetzt.

Vorteilhafte Weiterbildungen der Erfindung sind in den Unteransprüchen vorgesehen.

Die Erfindung wird im folgenden anhand eines figürlich dargestellten Ausführungsbeispieles (Figur) näher erläutert.

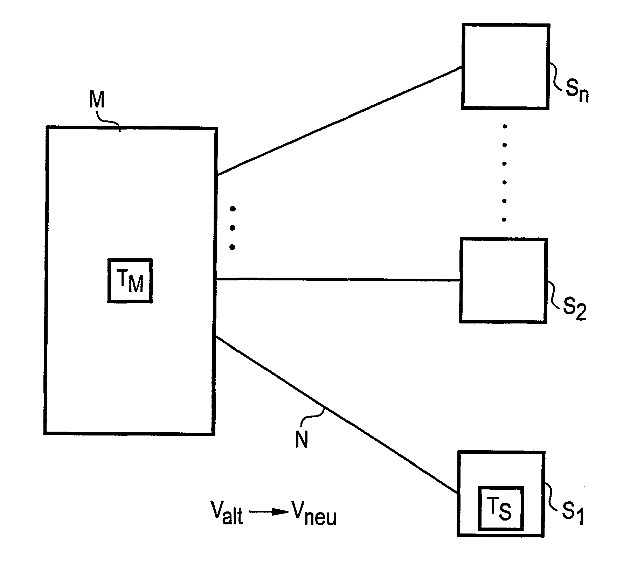

In der Figur ist eine Konfiguration mit einer lokalen Station M und einer Mehrzahl von Remote Stationen S₁...Sₙ aufgezeigt. Die lokale.Station M soll dabei die Funktion einer Mastereinrichtung (Sendeeinrichtung) und die Remote Stationen S₁...Sₙ die Funktion von Slaveeinrichtungen (Empfangseinrichtungen) aufweisen. Erfindungsgemäß wird ein quittierter Nachrichtenaustausch zwischen Mastereinrichtung M und Slaveeinrichtungen S₁... Sₙ durchgeführt.

In vorliegendem Fall wird davon ausgegangen, daß die Übertragung der Nutzdaten zwischen der Mastereinrichtung M und den Slaveeinrichtungen S₁...Sₙ mit einer erhöhten Übertragungsgeschwindigkeit vₙₑᵤ gesteuert werden soll. Dieser Vorgang wird von der Mastereinrichtung M initiiert. Die Kommunikation zwischen Master- und Slaveeinrichtung erfolgt über einen Inband Kanal. Zum besseren Verständnis wird lediglich die Erhöhung der Übertragungsgeschwindigkeit zwischen der Mastereinrichtung M und lediglich einer der Slaveeinrichtungen S₁...Sₙ z.B. S₁ beschrieben.

Zunächst wird über einen Managementkanal der Slaveeinrichtung S₁ eine Nachricht N übermittelt, mittels der mitgeteilt wird, daß die bislang verwendete Übertragungsgeschwindigkeit Vₐₗₜ erhöht werden soll. Die Nachricht N wird dabei noch mit der alten Übertragungsgeschwindigkeit Vₐₗₜ übertragen, damit die Slaveeinrichtung S₁ die Nachricht N problemlos empfangen kann. Zeitgleich hierzu werden in der Mastereinrichtung M zum einen ein Timer T_{M} gestartet, sowie zum anderen die entsprechenden Einstellungen zum Erhöhen der Übertragungsgeschwindigkeit Vₐₗₜ auf die neue Übertragungsgeschwindigkeit Vₙₑᵤ vorgenommen.

Die Nachricht N wird von der Slaveeinrichtung S₁ empfangen und ausgewertet. Daraufhin werden in der Slaveeinrichtung S₁ die entsprechenden Einstellungen zur Erhöhung der Übertragungsgeschwindigkeit Vₐₗₜ vorgenommen. Dieser Vorgang wird der Mastereinrichtung M bereits mit der neuen, erhöhten Übertragungsgeschwindigkeit Vₙₑᵤ über den Managementkanal über eine Quittungsnachricht quittiert. Zeitgleich hierzu wird in der Slaveeinrichtung S₁ ebenfalls ein Timer T_{S} gestartet.

Die Quittungsnachricht wird von der Mastereinrichtung M ausgewertet und nach Maßgabe des Auswerteergebnisses eine weitere Quittungsnachricht der Slaveeinrichtung S₁ zugeführt. Nach deren Erhalt kann die Slaveeinrichtung S₁ davon ausgehen, daß auch die Mastereinrichtung M in der Lage ist, mit der neuen, erhöhten Übertragungsgeschwindigkeit vₙₑᵤ zu übertragen. Erst wenn die Slaveeinrichtung S₁ diese Quittungsnachricht mit der neuen Übertragungsgeschwindigkeit vₙₑᵤ erhalten hat, wird daher die Übertragungsstrecke für die Übertragung der Nutzdaten mit der neuen, erhöhten Übertragungsgeschwindigkeit Vₙₑᵤ freigegeben.

Falls es während dieser Vorgänge zu einem Fehlverhalten kommt wird durch die Timer T_{M}, T_{S} nach einer vorgegebenen Timeout Zeitspanne sichergestellt, daß in beiden Stationen auf die alte Übertragungsgeschwindigkeit vₐₗₜ zurückgeschaltet wird. Die Umschaltung kann dann gegebenenfalls von der Mastereinrichtung M noch einmal gestartet werden.

Bei vorliegendem Ausführungsbeispiel wurde davon ausgegangen, daß lediglich die Erhöhung der Übertragungsgeschwindigkeit zwischen Mastereinrichtung M und Slaveeinrichtung S₁ gesteuert wird. Die hierzu relevanten Informationen sind in der Nachricht N abgelegt. Die Erfindung ist aber nicht auf diese Art des Nachrichtenaustausches beschränkt. So können hier eine Vielzahl von weiteren Parametern ausgetauscht werden. Beispielhaft hierfür seien Parameter wie Taktcharakteristik, Taktvarianten im Master/ Slave, Zustandscharakteristiken (Master/ Slave) synchrone/ asynchrone Betriebsweise oder CRC-Check genannt. Da beim Stand der Technik sich die Slaveeinrichtungen "abhängen" können, müssen hier diese Parameter oft in der richtigen Reihenfolge übertragen werden.

In einer weiteren Ausgestaltung der Erfindung wird nun vorgesehen, daß diese Reihenfolge der zu ändernden Parameter auf die Slaveeinrichtung beliebig zu variieren. Dies ist eine zwingende Konsequenz aus der Erfindung, gemäß der die Timeout Zeitspanne ein "Abhängen" der Remote Station verhindert. Dadurch ergibt sich die Möglichkeit für eine automatische Geschwindigkeitserkennung und die Ausnutzung einer maximal möglichen Übertragungsgeschwindigkeit bei vorgegebener Leitungslänge.

Im letzteren Fall wird mit einer niedrigen Übertragungsgeschwindigkeit begonnen, bei der sichergestellt ist, daß die Reichweite vom System überbrückt werden kann. Die Übertragungsgeschwindigkeit wird dann schrittweise solange erhöht, bis keine der beiden Quittungsnachrichten mehr empfangen werden kann. Die Übertragung der Nutzdaten wird dann mit der Übertragungsgeschwindigkeit durchgeführt, bei der zuletzt die Quittierung noch erfolgreich durchgeführt wurde.

Damit ist der Vorteil verbunden, daß im Falle einer Neuinstallation einer Verbindung die Übertragungsstrecke automatisch bezüglich Geschwindigkeit und Leitungslänge optimal eingestellt werden kann. Voraussetzung dafür ist je eine vorher zur Mastereinrichtung bzw. Slaveeinrichtung definierte Station mit der niedrigsten Geschwindigkeit als Defaulteinstellung. Bei Aktivierung der Autokonfiguration fängt der Master dann automatisch mit der Geschwindigkeitsumstellung an nachdem die Synchonisation bei der niedrigsten Geschwindigkeit gefunden wurde.

## Patentansprüche

1. Verfahren zum Verändern der Übertragungsgeschwindigkeit im Access Bereich,
mit einer Sendeeinrichtung und wenigstens einer Empfangseinrichtung, die in ihrem Zusammenwirken die Funktion einer Master/ Slave-Konfiguration aufweisen, indem erstere als Mastereinrichtung (M) und letztere als Slaveeinrichtung (S₁....Sₙ) ausgebildet sind und wobei zwischen der Mastereinrichtung (M) und der wenigstens einen Slaveeinrichtung (S₁...Sₙ) Nachrichten (N) ausgetauscht werden,
daß von der Mastereinrichtung (M) der in Frage kommenden Slaveeinrichtung (S₁) eine Nachricht (N) mit einer ersten Übertragungsgeschwindigkeit (Vₐₗₜ) übermittelt wird,
**dadurch gekennzeichnet,**
**daß** von der in Frage kommenden Slaveeinrichtung (S₁) nach Maßgabe des Auswerteergebnisses der empfangenen Nachricht (N) der Mastereinrichtung (M) der Empfang der Nachricht (N) mit Hilfe einer mit einer zweiten Übertragungsgeschwindigkeit (Vₙₑᵤ) übertragenen ersten Quittungsnachricht quittiert wird, daß von der Mastereinrichtung (M) der Empfang der ersten Quittungsnachricht mit Hilfe einer mit der zweiten Übertragungsgeschwindigkeit (vₙₑᵤ) übertragenen zweiten Quittungsnachricht der in Frage kommenden Slaveeinrichtung (S₁) quittiert wird, und
**daß** bei Ausbleiben einer der beiden Quittungsnachrichten innerhalb einer vorgegebenen Zeitspanne der ursprünglichen Zustand wiedereingenommen wird.

2. Verfahren nach Anspruch 1,
**dadurch gekennzeichnet,**
**daß** die Nachricht (N) eine Information darüber aufweist, daß die Übertragungsgeschwindigkeit und/ oder weitere Parameter verändert werden sollen.

3. Verfahren nach Anspruch 1, 2,
**dadurch gekennzeichnet,**
**daß** die weiteren Parameter Taktvarianten im Master/ Salve, synchrone/ asynchrone Betriebsart oder Datenübertragungen mit oder ohne CRC-Fehlerkorrekturen sind.

4. Verfahren nach Anspruch 1, 2,
**dadurch gekennzeichnet,**
**daß** die erste Übertragungsgeschwindigkeit (Vₐₗₜ) kleiner als die zweite Übertragungsgeschwindigkeit (Vₙₑᵤ) ist.

5. Verfahren nach einem der Ansprüche 1 bis 4,
**dadurch gekennzeichnet,**
**daß** die Nachricht (N) über einen Managementkanal zusammen mit dem Nutzkanal übertragen wird.

6. Verfahren nach einem der vorstehenden Ansprüche,
**dadurch gekennzeichnet,**
**daß** beginnend mit einer niedrigen Übertragungsgeschwindigkeit diese schrittweise solange erhöht wird, bis die erste oder zweite Quittungsnachricht nicht mehr empfangen werden kann, woraufhin die Nutzdaten mit der Übertragungsgeschwindigkeit übertragen werden, bei der zuletzt beide Quittungsnachrichten noch erfolgreich empfangen wurden.

## Claims

1. Method for changing the transmission rate in the access area,
comprising a transmitting device and at least one receiving device which exhibit the operation of a master/slave configuration in their interworking, the former being designed as master device (M) and the latter being designed as slave device (S₁...Sₙ) and messages (N) being exchanged between the master device (M) and the at least one slave device (S₁...Sₙ), with the master device (M) sending a message (N) with a first transmission rate (V_{old}) to the slave device (S₁) in question,
**characterized in that**
the slave device (S₁) in question acknowledges, in dependence on the result of the evaluation of the received message (N), the reception of the message (N) to the master device (M) with the aid of a first acknowledgement message transmitted at a second transmission rate (V_{new}),
**in that** the master device (M) acknowledges the reception of the first acknowledgement message to the slave device (S₁) in question with the aid of a second acknowledgement message transmitted at the second transmission rate (V_{new}),
and
**in that** when one of the two acknowledgement messages does not arrive within a predetermined period of time, the original state is resumed.

2. Method according to Claim 1,
**characterized in that** the message (N) has information indicating that the transmission rate and/or other parameters are to be changed.

3. Method according to Claim 1, 2,
**characterized in that**
the further parameters are clock variants in the master/slave synchronous/asynchronous operating mode or data transmissions with or without CRC error corrections.

4. Method according to Claim 1, 2,
**characterized in that** the first transmission rate (V_{old}) is lower than the second transmission rate (v_{new}).

5. Method according to one of Claims 1 to 4,
**characterized in that** the message (N) is transmitted via a management channel together with the user channel.

6. Method according to one of the preceding claims,
**characterized in that**,
beginning at a low transmission rate, the rate is increased in steps until the first or second acknowledgement message can no longer be received, whereupon the user data are transmitted at the transmission rate at which the two acknowledgement messages were most recently still successfully received.

## Revendications

1. Procédé pour modifier la vitesse de transmission dans la zone d'accès,
avec un dispositif d'émission et au moins un dispositif de réception, qui présentent dans leur coopération la fonction d'une configuration maître/esclave, du fait que le premier est conçu comme dispositif maître (M) et le dernier comme dispositif esclave (S₁...Sₙ) et des messages (N) sont échangés entre le dispositif maître (M) et l'au moins un dispositif esclave (S₁...Sₙ),
un message (N) étant transmis par le dispositif maître (M) au dispositif esclave (S₁...Sₙ) en question avec une première vitesse de transmission (V_{ancien}),
**caractérisé en ce que**
la réception du message (N) est acquittée par le dispositif esclave (S₁...Sₙ) en question en fonction du résultat de l'analyse du message (N) reçu au dispositif maître (M) à l'aide d'un premier message d'acquittement transmis avec une seconde vitesse de transmission (Vₙₒᵤᵥₑₐᵤ).
**en ce que** le dispositif maître (M) acquitte la réception du premier message d'acquittement à l'aide d'un second message d'acquittement transmis avec la seconde vitesse de transmission (Vₙₒᵤᵥₑₐᵤ) au dispositif esclave (S₁...Sₙ) en question, et
**en ce que**, en cas d'absence de l'un des deux messages d'acquittement, l'état initial est rétabli en l'espace d'un laps de temps prédéfini.

2. Procédé selon la revendication 1,
**caractérisé en ce que**
le message (N) présente une information sur le fait que la vitesse de transmission et/ou d'autres paramètres doivent être modifiés.

3. Procédé selon les revendications 1, 2,
**caractérisé en ce que**
les autres paramètres sont des variantes de cycle dans le maître/esclave, mode de service synchrone/asynchrone ou transmissions de données avec ou sans corrections d'erreur CRC.

4. Procédé selon les revendications 1, 2,
**caractérisé en ce que**
la première vitesse de transmission (V_{ancien}) est inférieure à la seconde vitesse de transmission (Vₙₒᵤᵥₑₐᵤ)

5. Procédé selon l'une quelconque des revendications 1 à 4,
**caractérisé en ce que**
le message (N) est transmis au moyen d'un canal de gestion en même temps que le canal utile.

6. Procédé selon l'une quelconque des revendications précédentes,
**caractérisé en ce que**
en commençant avec une faible vitesse de transmission, celle-ci est augmentée progressivement jusqu'à ce que le premier ou le second message d'acquittement ne puisse plus être reçu, après quoi les données utiles sont transmises avec la vitesse de transmission à laquelle, pour finir, les deux messages d'acquittement ont été reçus encore avec succès.
